# FASCICULE DE BREVET EUROPEEN

(11) **EP 0 845 442 B1**
(45) Date de publication et mention de la délivrance du brevet: **29.09.1999**
(21) Numéro de dépôt: 97402815.1
(22) Date de dépôt: 24.11.1997
(51) Int. Cl.: C03B 37/018

(54) **Installation de fabrication d'une préforme de fibre optique**
Vorrichtung zum Herstellung einer Vorform für optische Fasern
Apparatus for manufacturing an optical fibre preform

(30) Priorité: 02.12.1996 FR 9614738
(43) Date de publication de la demande: 03.06.1998
(73) Titulaire: ALCATEL, 75008 Paris (FR)
(72) Inventeur: Maurin, Laurent, 62218 Loison Sous Lens (FR); Lavanant, Gérard, 59130 Lambersart (FR); Pezet, Didier, 59130 Lambersart (FR)
(74) Mandataire: Buffière, Michelle

(56) Documents cités:
- WO-A-89/02419
- DE-A- 3 924 288
- US-A- 4 302 230
- PATENT ABSTRACTS OF JAPAN vol. 7, no. 122 (C-168), 26 mai 1983 & JP 58 041734 A (SHOWA DENSEN DENRAN CO. LTD.), 11 mars 1983,
- PATENT ABSTRACTS OF JAPAN vol. 6, no. 11 (C-88), 22 janvier 1982 & JP 56 134528 A (FUJITSU CO. LTD.), 21 octobre 1981,
- PATENT ABSTRACTS OF JAPAN vol. 11, no. 365 (C-460), 27 novembre 1987 & JP 62 138338 A (SUMITOMO ELECTRIC IND. CO. LTD.), 22 juin 1987,
- PATENT ABSTRACTS OF JAPAN vol. 9, no. 171 (C-291), 16 juillet 1985 & JP 60 041537 A (SUMITOMO ELECTRIC IND. CO. LTD.), 5 mars 1985,

## Description

La présente invention se rapporte à la fabrication d'une préforme de fibre optique par la méthode CVD. Elle porte plus particulièrement sur une installation de fabrication d'une préforme de fibre optique, comportant un dispositif d'évacuation de suies excédentaires au cours de la fabrication de la préforme.

De manière bien connue pour la fabrication d'une préforme de fibre optique par la méthode CVD, on assure l'obtention de suies de silice dans un tube de réaction à partir d'un mélange gazeux injecté dans celui-ci et la vitrification de ces suies, par chauffage à l'aide d'un chalumeau mobile par passes successives le long du tube monté rotatif sur lui-même. Les suies obtenues au-delà de la course du chalumeau ne sont pas vitrifiées. Elles sont dites suies excédentaires, qui sont reçues et se déposent dans la partie terminale aval du tube de réaction, au-delà de la course du chalumeau, ou dans un tube de sortie relié au tube de réaction alors balayé sur toute la longueur sensiblement par le chalumeau. Elles sont évacuées pour éviter un colmatage de la zone où elles se déposent et des défauts qui en résulteraient dans la préforme.

Le document JP-A- 58041734 divulgue un dispositif d'évacuation de ces suies excédentaires, comportant une tige mobile en translation et équipée d'une vis terminale à filets hélicoïdaux plats, qui viennent racler la surface intérieure de la zone de dépôt pour les évacuer dans une boîte de collecte.

Un tel dispositif n'est pas toujours satisfaisant, car les suies excédentaires peuvent s'accumuler entre les filets de la vis alors rendue inefficace et/ou être repoussées vers la préforme.

Le document WO 89/02 419 décrit un autre dispositif d'évacuation de ces suies excédentaires en aval d'une préforme au cours de la fabrication de celle-ci. Ce dispositif comporte une structure du type vis qui est rotative dans le tube de sortie et est réalisée par une conduite tubulaire enroulée en hélice. Cette conduite est une conduite d'injection de gaz sous pression et est munie de trous ouverts vers la sortie du tube de sortie, pour créer un courant de gaz entraînant les suies excédentaires vers la sortie du tube de sortie. Les filets tubulaires n'assurent pas un raclage très efficace de la zone de dépôt. Par ailleurs, la pression de gaz dans ce conduit doit être suffisante pour que le courant de gaz dans le tube de sortie soit efficace. Par contre, elle risque de provoquer des turbulences préjudiciables à la qualité de la préforme.

La présente invention a pour but d'éviter les inconvénients de ces systèmes connus.

Elle a pour objet une installation de fabrication d'une préforme de fibre optique par la méthode CVD, comportant un tube de réaction entraîné en rotation sur lui-même et associé à un chalumeau mobile en translation, pour l'obtention de suies de silice à partir d'un mélange gazeux injecté par une extrémité d'entrée dudit tube de réaction et leur vitrification dans celui-ci, un tube de sortie prolongeant le tube de réaction à l'opposé de ladite extrémité d'entrée et équipé intérieurement d'une vis à filets hélicoïdaux plats, pour l'évacuation des suies dites excédentaires reçues dudit tube de réaction dans ledit tube de sortie, ladite vis étant de diamètre extérieur sensiblement égal à celui intérieur dudit tube de sortie, caractérisée en ce que ladite vis est une hélice évidée en long pour définir un canal axial intérieur et en ce qu'elle comporte un cylindre logé dans ledit canal, monté désaxé dans celui-ci et en contact avec la surface intérieure de ladite hélice, et entraîné en rotation sur lui-même dans ledit canal.

Cette installation peut aussi présenter au moins l'une des caractéristiques additionnelles suivantes :
- les filets de la vis sont de profil en forme d'un trapèze rectangle, dont le côté en biais entre les deux bases opposées est de préférence tronqué,
- l'installation comporte un ensemble d'entraînement en rotation du cylindre et de ladite vis en sens contraire l'un de l'autre à travers un joint tournant associé, la vis étant de préférence elle-même entraînée en rotation en sens inverse desdits tubes de réaction et de sortie, de telle sorte que le débit d'évacuation des suies soit maximum,
- l'installation comporte une boîte de collecte des suies excédentaires évacuées du tube de sortie, la boîte étant couplée audit tube de sortie, et de préférence comporte en outre des moyens d'injection d'une contre pression de gaz neutre dans ladite boîte de collecte.

Les caractéristiques et avantages de l'invention ressortiront de la description d'un mode de réalisation donné à titre d'exemple et illustré dans les dessins ci-annexés. Dans ces dessins :
- la figure 1 est une vue schématique d'une installation selon l'invention de fabrication d'une préforme optique,
- la figure 2 est une vue longitudinale partielle, à échelle agrandie par rapport à la figure 1, de l'installation et plus particulièrement d'un dispositif d'évacuation de suies excédentaires prévu dans celle-ci,
- la figure 3 est une vue en coupe transversale du dispositif de la figure 2,
- la figure 4 est une vue agrandie du profil d'un filet de vis du dispositif de la figure 2,
- la figure 5 est une variante par rapport à la figure 4.

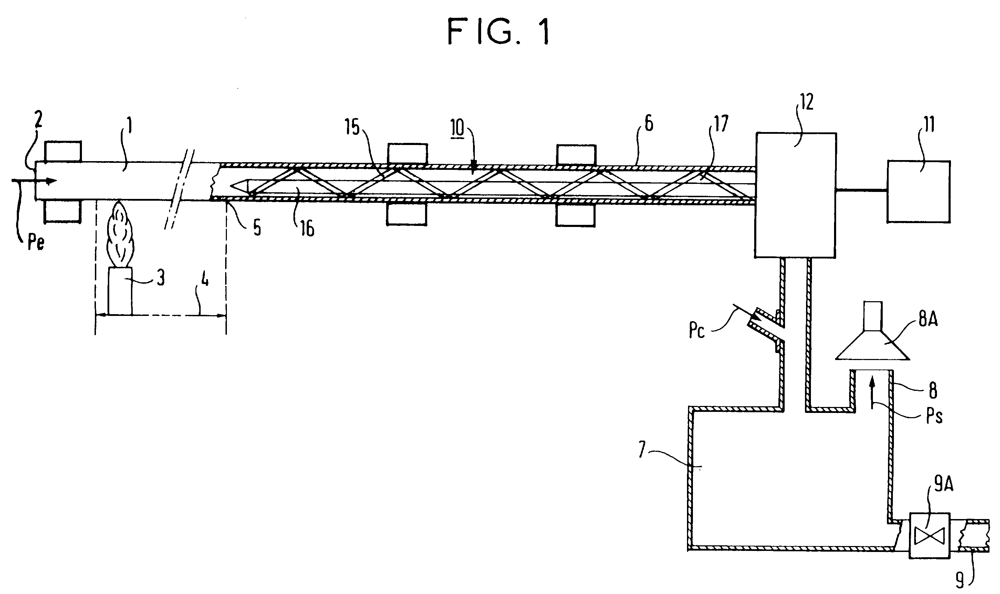

En se référant à la figure 1, on a représenté en 1 un tube de réaction pour la fabrication d'une préforme optique par la méthode CVD. Ce tube 1 est monté rotatif sur lui-même sur un tour verrier. Il reçoit par une extrémité d'entrée 2 un mélange gazeux pour l'obtention de suies de silice à partir de celui-ci. Un chalumeau 3 est mobile en translation le long du tube de réaction, sur une course 4 depuis sensiblement l'extrémité d'entrée jusqu'à un point d'arrêt 5. Chacune des passes du chalumeau est suivie d'un retour au point de départ du chalumeau éteint.

Ce tube de réaction 1 est de préférence prévu de longueur supérieure à la longueur de la course 4 du chalumeau pour ainsi définir directement un tube de sortie 6 de suies excédentaires, au-delà de cette course. En variante, il peut être de longueur juste légèrement supérieure à celle de la course du chalumeau et être relié à un tube de sortie des suies excédentaires.

Le tube de sortie 6 est lui-même relié à une boîte de collecte 7 des suies excédentaires. Cette boîte de collecte 7 est équipée d'une sortie de gaz 8 munie d'un système ou hotte d'aspiration et filtrage 8A. Elle comporte aussi une conduite d'évacuation de suies 9, vers un dispositif antipollution non représenté, à travers une vanne 9A à ouverture contrôlée montée sur cette conduite 9.

Un dispositif 10 de raclage et d'évacuation des suies excédentaires est monté dans le tube de sortie 6, pour les évacuer de celui-ci dans la boîte de collecte. Il est rotatif dans le tube de sortie et relié à cet effet à un système d'entraînement 11 à travers un joint tournant 12. Ce joint tournant couple le système d'entraînement 11 au dispositif 10 et le tube de sortie 6 à la boîte de collecte 7.

Le tube de réaction 1, le tube de sortie 6 et la boîte de collecte 7 constituent un ensemble étanche, qui est sous pression interne résultant de la pression Pe d'entrée du mélange gazeux injecté dans le tube de réaction 1, de la pression Ps de sortie de gaz de la boîte de collecte 7, et d'une contre-pression supplémentaire Pc d'un gaz neutre tel que de l'azote, injecté à distance du tube de réaction 1. Cette contre-pression de gaz neutre est injectée dans la boîte de collecte 7, de préférence dans sa conduite de couplage au tube de sortie 6. Elle est choisie telle que Pe > Pc > Ps, pour créer une perte de charge augmentant la pression interne dans les tubes de réaction et de sortie, sans créer de turbulences dans ceux-ci. Cette augmentation de la pression interne dans ces tubes permet d'éviter au tube de réaction 1 de s'effondrer au passage du chalumeau 3, par un phénomène de rétreint conduisant à une variation de son diamètre, et d'éviter ainsi toute perturbation de la géométrie de la préforme.

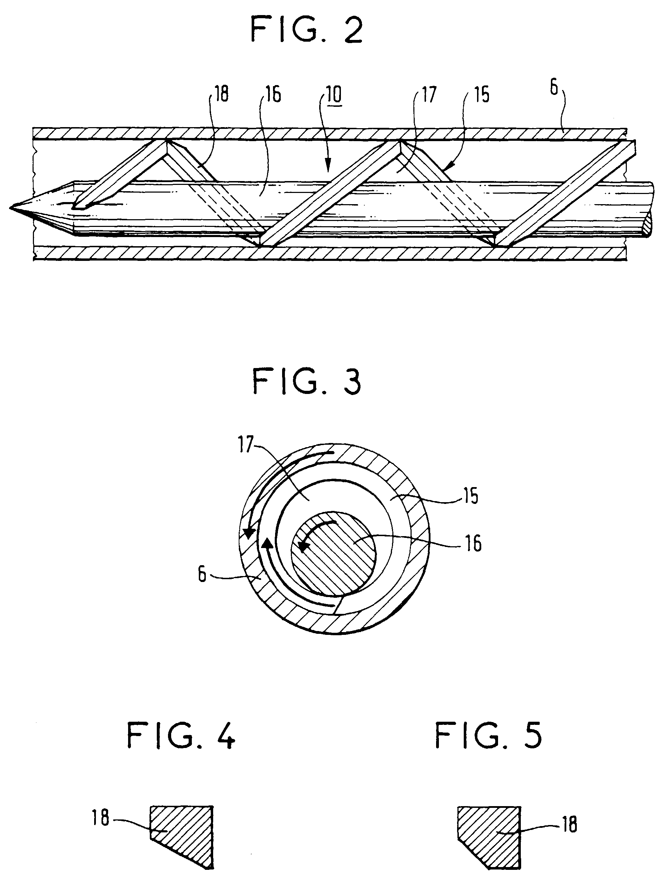

Le dispositif d'évacuation des suies excédentaires est décrit plus en détail en se référant plus particulièrement aux figures 2 et 3. Il comporte une vis 15 évidée intérieurement et de préférence rotative sur elle-même dans le tube de sortie 6 et un cylindre 16 rotatif sur lui-même dans la vis évidée.

La vis évidée 15 définit un canal axial 17 entouré par une hélice à filets plats 18. Elle est de diamètre extérieur sensiblement égal au diamètre intérieur du tube de sortie, l'hélice étant ainsi axiale et sensiblement en contact avec la surface intérieure dudit tube de sortie. L'angle des filets d'hélice est de préférence de 45°. Cette hélice s'étend sur toute la longueur du tube de sortie, sensiblement depuis le point d'arrêt 5 du chalumeau.

Le cylindre 16 est par contre monté désaxé dans le canal intérieur 17 de la vis et vient longitudinalement en contact avec sa surface intérieure. Il est de préférence plein mais peut être creux, pourvu qu'il présente une masse suffisante évitant les vibrations de ce cylindre rotatif et celles résultantes de la vis dans le tube de sortie.

L'action conjuguée de la vis évidée et du cylindre rotatif et désaxé dans la vis conduit à un drainage efficace des suies excédentaires jusque dans la boîte de collecte et rend le dispositif 10 auto-nettoyant. Cette vis évidée 15 est elle-même de préférence rotative dans le tube de sortie 6 pour optimiser l'efficacité du dispositif 10. Sa rotation sur elle-même est faite en sens inverse de celle du tube de sortie 6 et de celle du cylindre 16, pour l'évacuation des suies excédentaires avec un débit maximal. Le cylindre intérieur 16, qui assure l'auto-nettoyage de sa surface périphérique et de la surface intérieure de la vis, évite toute accumulation de suies entre leurs surfaces et entre les filets de la vis. L'évacuation des gaz provenant du tube de réaction se fait simultanément par l'espace intérieur laissé libre entre le cylindre 16 et la vis évidée 15.

L'extrémité du cylindre 16, située du côté du tube de réaction 1, vient à distance réduite du point d'arrêt 5 du chalumeau. Elle est profilée en pointe pour favoriser l'écoulement des gaz contre elle et ne pas provoquer des turbulences à ce niveau.

Le système d'entraînement 11 de la vis rotative et du cylindre rotatif dans le tube de sortie est de type en tant que tel connu et n'est donc pas décrit. On indique qu'il comporte en particulier un train épicycloïdal de couplage de la vis et du cylindre à un moteur d'entraînement commun et peut permettre un mouvement de translation relatif de la vis et du cylindre dans le tube de sortie, pour éviter des zones mortes non raclées dans celui-ci. Cette translation de la vis et du cylindre est effectuée de préférence pendant le retour du chalumeau après chacune de ses courses de balayage du tube de réaction 1.

En se référant aux figures 4 et 5, on voit que le profil des filets 18 de la vis est avantageusement de forme trapézoïdale, pour un excellent raclage du tube de sortie et aussi un bon guidage mécanique de la vis rotative en évitant de générer des vibrations.

Dans la figure 4, le filet 18 de la vis a la forme d'un trapèze rectangle, dont les bases du trapèze sont transversales à l'axe de la vis, la petite base est située du côté du tube de réaction, et l'extrémité du côté en biais vient en appui contre la surface du tube de sortie. Dans la figure 5, le profil des filets est un trapèze rectangle tronqué dont le côté tronqué est celui en biais qui vient ainsi sur une partie relativement importante de sa longueur en contact avec la surface intérieure du tube de sortie, en améliorant donc l'efficacité du raclage.

## Revendications

1. Installation de fabrication d'une préforme de fibre optique par la méthode CVD, comportant un tube de réaction (1) entraîné en rotation sur lui-même et associé à un chalumeau mobile en translation, pour l'obtention de suies de silice à partir d'un mélange gazeux injecté par une extrémité d'entrée (2) dudit tube de réaction et leur vitrification dans celui-ci, un tube de sortie (6) prolongeant le tube de réaction (1) à l'opposé de ladite extrémité d'entrée (2) et équipé intérieurement d'une vis (15) à filets hélicoïdaux plats, pour l'évacuation des suies dites excédentaires reçues dudit tube de réaction (1) dans ledit tube de sortie (6), ladite vis (15) étant de diamètre extérieur sensiblement égal à celui intérieur dudit tube de sortie (6), caractérisée en ce que ladite vis (15) est une hélice évidée en long pour définir un canal axial intérieur (17) et en ce qu'elle comporte un cylindre (16) logé dans ledit canal (17), monté désaxé dans celui-ci et en contact avec la surface intérieure de ladite hélice, et entraîné en rotation sur lui-même dans ledit canal.

2. Installation selon la revendication 1, caractérisée en ce que lesdits filets (18) ont un profil sensiblement en forme de trapèze rectangle, dont les bases opposées sont transversales à l'axe de ladite vis (15) et le côté en biais est sensiblement en contact avec la surface intérieure de ladite hélice.

3. Installation selon la revendication 2, caractérisée en ce que le profil des filets (18) est en forme de trapèze rectangle tronqué, dont la partie tronquée est prévue sur ledit côté en biais et est en appui sur ladite surface intérieure de ladite hélice.

4. Installation selon l'une des revendications 1 à 3, caractérisée en ce que ledit cylindre (16) a une extrémité profilée en pointe et située du côté dudit tube de réaction (1).

5. Installation selon l'une des revendications 1 à 4, caractérisée en ce que ledit cylindre (16) est prévu de masse suffisante évitant des vibrations contre ladite vis (15).

6. Installation selon la revendication 5, caractérisée en ce que ledit cylindre (16) est massif.

7. Installation selon l'une des revendications 1 à 6, caractérisée en ce qu'elle comporte un ensemble d'entraînement (11) en rotation du cylindre (16) et de ladite vis (15) en sens contraire l'un de l'autre à travers un joint tournant associé (12), la vis (15) étant elle-même entraînée en rotation en sens inverse desdits tubes de réaction et de sortie (6, 1) en assurant l'évacuation des suies excédentaires à débit maximal.

8. Installation selon la revendication 7, caractérisée en ce que ladite vis (15) et ledit cylindre (16) sont entraînés en translation l'un par rapport à l'autre par ledit ensemble d'entraînement (11).

9. Installation selon l'une des revendications 1 à 8, caractérisée en ce qu'elle comporte une boîte de collecte (7) des suies excédentaires évacuées du tube de sortie, couplée audit tube de sortie (6).

10. Installation selon la revendication 9, caractérisée en ce qu'elle comporte des moyens d'injection d'une contre pression (Pc) de gaz neutre dans ladite boîte de collecte (7).

## Patentansprüche

1. Vorrichtung zur Herstellung einer Vorform für optische Fasern durch das CVD-Verfahren, umfassend eine Reaktionsröhre (1), die in Rotation um sich selbst versetzt ist und mit einem mobilen Brenner in Translation verbunden ist, zur Erzeugung von Siliziumruß aus einer gasförmigen Mischung, die an einem Eingangsende (2) der Reaktionsröhre eingespritzt wird sowie zu dessen Verglasung in derselben, einer Ausgangsröhre (6), die die Reaktionsröhre (1) gegenüber dem Eingangsende (2) verlängert, und im Inneren mit einer Schraube (15) mit flachem Schraubgewinde versehen ist, für die Evakuierung des überschüssigen Rußes, der von der Reaktionsröhre (1) in der Ausgangsröhre (6) aufgenommen wird, wobei die Schraube (15) einen Außendurchmesser aufweist, der im wesentlichen dem Inneren der Ausgangsröhre (6) entspricht, dadurch gekennzeichnet, daß die Schraube (15) eine über die Länge hohle Schnecke ist, so daß ein innerer Axialkanal (17) definiert ist, und dadurch, daß sie einen Zylinder (16) umfaßt, der in diesem Kanal (17) angeordnet ist, versetzt in diesem montiert und in Kontakt mit der Innenoberfläche der Schnecke, und in Rotation um sich selbst versetzt in dem Kanal.

2. Vorrichtung nach Anspruch 1, dadurch gekennzeichnet, daß das Gewinde (18) ein Profil im wesentlichen mit der Form eines Rechtecktrapezes hat, dessen gegenüberliegende Grundlinien transversal zur Achse der Schraube (15), sind und dessen abgeschrägter Rand im wesentlichen in Kontakt mit der Innenoberfläche der Schnecke steht.

3. Vorrichtung nach Anspruch 2, dadurch gekennzeichnet, daß das Profil des Gewindes (18) die Form eines abgestumpften Rechtecktrapezes hat, dessen abgestumpfter Bereich an dem abgeschrägten Rand vorgesehen ist und sich an der Innenoberfläche der Schnecke abstützt.

4. Vorrichtung nach einem der Ansprüche 1 bis 3, dadurch gekennzeichnet, daß der Zylinder (16) angrenzend an die Reaktionsröhre (1) ein spitz zulaufend profiliertes Ende hat.

5. Vorrichtung nach einem der Ansprüche 1 bis 4, dadurch gekennzeichnet, daß der Zylinder (16) mit einer ausreichenden Masse zur Vermeidung von Vibrationen gegen die Schraube (15) versehen ist.

6. Vorrichtung nach Anspruch 5, dadurch gekennzeichnet, daß der zylinder (16) massiv ist.

7. Vorrichtung nach einem der Ansprüche 1 bis 6, dadurch gekennzeichnet, daß sie eine Antriebsanordnung (11) zur Rotation des Zylinders (16) sowie der Schraube (15) in einander entgegengesetzte Richtungen aufweist, über eine gemeinschaftliche drehende Verbindung (12), wobei die Schraube (15) selbst gegenüber der Reaktions- und Ausgangsröhre (1, 6) in entgegengesetzter Richtung angetrieben ist, um die Evakuierung des überschüssigen Rußes mit maximaler Leistung zu gewährleisten.

8. Vorrichtung nach Anspruch 7, dadurch gekennzeichnet, daß die Schraube (15) und der Zylinder (16) durch die Antriebsanordnung (11) bezüglich einander in Translation versetzt sind.

9. Vorrichtung nach einem der Ansprüche 1 bis 8, dadurch gekennzeichnet, daß sie einen Auffangbehälter (7) für aus der Ausgangsröhre evakuierten überschüssigen Ruß umfaßt, der mit der Ausgangsröhre (6) verbunden ist.

10. Vorrichtung nach Anspruch 9, dadurch gekennzeichnet, daß sie Gegendruckinjektionseinrichtungen (Pc) für neutrales Gas in den Auffangbehälter (7) umfaßt.

## Claims

1. An installation for fabricating an optical fibre preform by the CVD method, including a reaction tube (1) driven in rotation on its axis and associated with a torch that is mobile in translation, to obtain silica soot from a gas mixture injected via an inlet end (2) of said reaction tube and its vitrification therein, an exhaust tube (6) extending the reaction tube (1) at the end opposite said inlet end (2) and equipped internally with a screw (15) having flat helical threads to remove excess soot received from said reaction tube (1) into said exhaust tube (6), said screw (15) having an outside diameter substantially equal to the inside diameter of said exhaust tube (6), characterized in that said screw (15) is a helix hollowed out lengthwise to define an inside axial passage (17) and in that it includes a cylinder (16) housed in said passage (17), mounted eccentrically in the latter and in contact with the inside surface of said helix and driven in rotation on its axis in said passage.

2. An installation according to claim 1 characterized in that said threads (18) have a substantially right-angle trapezium shape profile with the opposite bases transverse to the axis of said screw (15) and the slant side substantially in contact with the inside surface of said helix.

3. An installation according to claim 2 characterized in that the profile of the threads (18) is in the shape of a truncated right-angle trapezium the truncated part of which is on said slant side and bears on said inside surface of said helix.

4. An installation according to any one of claims 1 to 3 characterized in that said cylinder (16) has a pointed profile at one end on the same side as said reaction tube (1).

5. An installation according to any one of claims 1 to 4 characterized in that said cylinder (16) has sufficient mass to prevent vibration against said screw (15).

6. An installation according to claim 5 characterized in that said cylinder (16) is solid.

7. An installation according to any one of claims 1 to 6 characterized in that it includes a drive system (11) for rotating the cylinder (16) and said screw (15) in opposite directions via an associated rotary seal (12), the screw (15) itself being driven in rotation in the opposite direction to said reaction tube and said exhaust tube (6,1), ensuring removal of excess soot at a maximal flow rate.

8. An installation according to claim 7 characterized in that said screw (15) and said cylinder (16) are driven in translation relative to each other by said drive system (11).

9. An installation according to any one of claims 1 to 8 characterized in that it includes a collecting box (7) for excess soot removed from the exhaust tube, coupled to said exhaust tube (6).

10. An installation according to claim 9 characterized in that it includes means for injecting a neutral gas counterpressure (Pc) into said collecting box (7).
